# FASCICULE DE BREVET EUROPEEN

(11) **EP 3 434 400 B1**
(45) Date de publication et mention de la délivrance du brevet: **08.01.2020**
(21) Numéro de dépôt: 18184257.6
(22) Date de dépôt: 18.07.2018
(51) Int. Cl.: B23B 45/00, B23Q 11/10, B23Q 17/09, B23B 45/04

(54) **PERCEUSE COMPRENANT DES MOYENS MÉCANIQUES DE RÉGULATION DU DÉBIT DE LUBRIFICATION EN FONCTION DES EFFORTS DE COUPE**
BOHRMASCHINE, DIE MECHANISCHE MITTEL ZUR REGULIERUNG DES SCHMIERMITTELDURCHSATZES IN ABHÄNGIGKEIT VON DEN SCHNITTLEISTUNGEN UMFASST
DRILL COMPRISING MECHANICAL MEANS TO CONTROL THE LUBRICATION FLOW ACCORDING TO CUTTING FORCES

(30) Priorité: 25.07.2017 FR 1757072
(43) Date de publication de la demande: 30.01.2019
(73) Titulaire: Seti-Tec, 77185 Lognes (FR)
(72) Inventeur: ATZORI, Pierre Alexis, 77600 CHANTELOUP EN BRIE (FR); CRESSON, Olivier, 77515 LA CELLE SUR MORIN (FR); PETITGAS, Jérôme, 77230 MOUSSY LE NEUF (FR); PEREIRA, Sébastien, 2820-543 Charneca da Caparica (PT)
(74) Mandataire: Vidon Brevets & Stratégie

(56) Documents cités:
- EP-A1- 2 944 420
- DE-A1- 4 339 770
- FR-A1- 2 943 570

## Description

### 1. Domaine de l'invention

Le domaine de l'invention est celui de la conception et de la fabrication de dispositifs de perçage couramment dénommés perceuses.

L'invention se rapporte plus particulièrement au contrôle de la lubrification, en cours de perçage, de l'outil de coupe embarqué par une perceuse.

### 2. Art antérieur et ses inconvénients

Des perceuses sont couramment utilisées dans l'industrie pour procéder au perçage d'éléments divers. Par exemple, des perceuses sont utilisées dans le domaine aéronautique pour ménager des perçages dans les structures d'avion.

On utilise dans ce secteur notamment des perceuses dites à avance automatique, c'est-à-dire des perceuses dont la broche de perçage qui porte un outil coupant, est entrainée simultanément en translation et en rotation selon son axe longitudinal.

Ces perceuses sont généralement dotées d'un moteur pneumatique pour entrainer en mouvement la broche de perçage. Le document FR-A1-2 881 366 décrit par exemple une telle perceuse.

Au cours d'une opération de perçage, l'outil de coupe doit être lubrifié de sorte à faciliter la coupe de la matière par le foret et à refroidir celui-ci.

Dans ce but, on connaît des perceuses pneumatiques comprenant une pompe à lubrifiant alimentant un canal de distribution de lubrifiant s'étirant à travers la broche de perçage et débouchant à l'intérieur de l'outil de coupe placé à l'extrémité de celle-ci, l'outil de coupe comprenant des orifices de distribution de lubrifiant.

Ces pompes sont généralement de type à piston ou bien péristaltique.

Pour fonctionner, c'est-à-dire pour délivrer un débit de lubrifiant, ces pompes sont alimentées en air comprimé. Plus particulièrement, le circuit d'alimentation en air comprimé du moteur de la perceuse comprend un canal en dérivation alimentant la pompe à lubrifiant via une vanne, la pression d'alimentation de celle-ci pouvant être réduit comparativement au débit d'alimentation du moteur.

Classiquement, la pompe à lubrifiant est alimentée en air comprimée et délivre du lubrifiant à l'outil coupant lorsque la perceuse est mise en route lors d'un départ cycle. Elle n'est plus alimentée en air comprimée lorsque le cycle de perçage s'achève de sorte à stopper la lubrification de l'outil coupant. Ainsi, dès lors que l'outil coupant est animé d'un mouvement selon son axe, il est alimenté en lubrifiant.

La perceuse peut être en outre équipée d'un bouton d'amorçage qui permet à un opérateur d'activer le fonctionnement de la pompe en dehors d'un cycle de perçage et donc des phases au cours desquelles le foret est entrainé selon son axe par la perceuse. Ceci permet à l'opérateur de vérifier sans risque que le débit de lubrifiant est correct et arrive bien dans les canaux de lubrification de l'outil coupant.

Ce bouton d'amorçage intègre un rappel par ressort lui permettant de revenir à son état repos lorsque l'opérateur arrête le test. A l'état repos la vanne est fermée et la pompe à lubrifiant à l'arrêt.

Dès lors que le départ cycle de la perceuse est lancé une portion de l'air comprimé alimentant le moteur de la perceuse est déviée vers le circuit d'alimentation de la pompe à lubrifiant si bien que la vanne s'ouvre pour alimenter la pompe à lubrifiant de sorte qu'elle distribue du lubrifiant à l'outil coupant.

Dans le domaine de l'aéronautique, les perceuses sont généralement solidarisées à des grilles de perçage fixées à proximité de la structure à percer et comprenant une pluralité de trous situés au droit des zones à percer dans la structure. Pour réaliser un perçage au niveau d'un trou de la grille de perçage, la perceuse y est solidarisée avec des moyens de solidarisation prévus à cet effet et connu de l'homme du métier. La perceuse est ainsi déplacée de trou en trou sur la grille pour procéder à une succession de perçages.

Pour certains perçages, la distance entre la grille de perçage et la matière à percer est importante. Il en résulte qu'au cours de la phase d'approche de l'outil coupant depuis la grille de perçage vers la structure à percer et de la phase de recul de l'outil coupant depuis la structure percée vers la grille de perçage après perçage, c'est-à-dire en dehors des phases de perçage proprement dites (phases d'enlèvement de matière), l'outil coupant est alimenté en lubrifiant et déverse celui-ci inutilement. Ceci est aussi vrai lorsque la pointe du foret débouche en dehors de la pièce à percer après la réalisation d'un perçage débouchant (phase de débouchage).

Cette lubrification excessive engendre une consommation superflue de lubrifiant ainsi qu'une pollution de la zone de perçage induisant la nécessiter de procéder à des opérations de nettoyage, induisant de coûts supplémentaires.

Diverses solutions ont été imaginées pour obvier ces problèmes. Celles-ci visent à stopper la lubrification pendant ces phases d'approche, de recul et de débouchage.

Une première solution consiste à mettre en œuvre un système mécanique en bout de broche avec un ressort s'opposant à la poussée de la broche en direction de la pièce à percer. Au-delà d'un certain effort de poussée, la lubrification est autorisée. Ici, la poussée du foret est ainsi prise en considération pour déterminer si le foret est en action de coupe ou pas. La compression de ce ressort provoque l'activation de la vanne d'alimentation en air comprimé de la pompe de sorte que celle-ci distribue du lubrifiant à l'outil de coupe dès lors que la poussée sur celui-ci le long de son axe atteint un certain seuil prédéterminé à partir duquel il est considéré que le foret est en action de perçage (enlèvement de matière).

Cette solution permet de ne distribuer du lubrifiant au foret que lorsqu'il est réellement en action de perçage et non plus lors des phases d'approche, de recul ou de débouchage. Ceci permet de réduire la consommation en lubrifiant et de limiter la pollution de la zone de perçage et les frais inhérents à cela.

Cette solution présente toutefois certains inconvénients, en particulier lors de la réalisation d'un perçage dit à avance vibratoire.

Au cours de certaines opérations de perçage, il est nécessaire pour favoriser l'évacuation des copeaux, d'animer l'outil coupant d'une avance dite vibratoire, c'est-à-dire d'une avance ayant une composante alternative par exemple sinusoïdale induisant une cassure du copeau.

La mise en œuvre d'un ressort en bout de broche pour détecter la pousser sur l'outil coupant au cours d'une opération de perçage vibratoire tend à amortir la vibration induite par l'avance vibratoire et à en inhiber, au moins en partie, les effets bénéfiques sur l'évacuation des copeaux, ce qui n'est bien entendu pas souhaitable.

Une deuxième solution consiste à mettre en œuvre un système électronique qui mesure le débit d'air consommé par le moteur pneumatique de la perceuse et contrôle en fonction de celui-ci la vanne d'alimentation en air comprimé du moteur est ainsi le débit de distribution de la pompe à lubrifiant.

La consommation du moteur pneumatique étant proportionnelle à la charge sur l'outil coupant, la lubrification est en principe mise en œuvre seulement lorsque le débit d'alimentation du moteur atteint une valeur seuil à partir de laquelle il est considéré que le foret est réellement en action de perçage et non plus lors des phases d'approche, de recul ou de débouchage. Ceci permet de réduire la consommation en lubrifiant et de limiter la pollution de la zone de perçage et les frais inhérents à cela.

Cette solution présente toutefois quelques inconvénients, en particulier :
- l'étalonnage électronique de l'activation de la vanne en fonction du débit d'alimentation en air du moteur est délicat à réaliser ;
- fragilité de l'électronique dans un environnement difficile (plus fragile que du matériel mécanique).

La gestion de la lubrification de l'outil coupant d'une perceuse peut donc encore être améliorée.

EP 2 944 420 A1 divulgue une perceuse ayant les caractéristiques du préambule de la revendication 1.

### 3. Objectifs de l'invention

L'invention a notamment pour objectif d'apporter une solution efficace à au moins certains de ces différents problèmes.

Notamment l'invention a pour objectif, selon au moins un mode de réalisation, d'optimiser la lubrification de l'outil coupant mis en mouvement par une perceuse au cours d'une opération de perçage.

Notamment, l'invention a pour objectif de procurer une telle technique qui permet, selon au moins un mode de réalisation, de limiter la consommation en lubrifiant.

Un autre objectif de l'invention est de procurer une telle technique qui permet, selon au moins un mode de réalisation, de limiter la pollution de la zone de perçage par du lubrifiant.

Un autre objectif de l'invention est de procurer une telle technique qui permet, selon au moins un mode de réalisation, de stopper la lubrification en dehors des phases effectives de perçage, c'est-à-dire de stopper la lubrification au cours des phases d'approche, de recul et de débouchage.

Un autre objectif de l'invention est de procurer un telle technique qui permet, selon au moins un mode de réalisation, de réguler la lubrification en fonction des efforts de coupe supportés par un outil de coupe au cours d'un perçage, de manière simple, fiable, robuste et efficace.

Un autre objectif de l'invention est de procurer un telle technique qui permet, selon au moins un mode de réalisation, de régler le seuil de déclenchement de la lubrification.

### 4. Présentation de l'invention

Ces objectifs, ainsi que d'autres qui apparaitront par la suite, sont atteints selon l'invention au moyen d'une perceuse comprenant une broche de perçage apte à entrainer en mouvement un outil coupant, ladite perceuse comprenant au moins un canal de distribution d'un lubrifiant audit outil coupant, une pompe d'alimentation dudit canal en lubrifiant et des moyens de contrôle du débit de ladite pompe.

Selon l'invention, une telle perceuse comprend des moyens mécaniques de détermination d'au moins une information représentative du couple exercé sur ladite broche selon son axe en cours de perçage, lesdits moyens de contrôle de ladite pompe agissant sur le débit de ladite pompe en fonction du couple exercé sur ladite broche selon son axe en cours de perçage.

Ainsi l'invention repose sur une approche originale qui consiste à réguler le débit de lubrification de l'outil coupant sur la base du couple exercé sur ladite broche selon son axe en cours de perçage non plus mesuré au moyen de composants électroniques mais par la mise en œuvre de seuls moyens mécaniques. L'invention propose ainsi une solution nettement plus simple et robuste que celle de l'art antérieur, surtout en milieu hostile, et tout aussi efficace.

Selon une variante possible, lesdits moyens de détermination sont configurés pour évaluer ledit couple.

Selon une variante possible, ladite pompe est pneumatique et lesdits moyens de contrôle comprennent au moins une vanne d'alimentation en air comprimé de ladite pompe, ladite vanne étant mobile entre au moins :
- une position fermée dans laquelle ladite pompe n'est pas alimentée en air comprimé, et
- une position ouverte dans laquelle ladite pompe est alimentée en air comprimé pour distribuer ledit lubrifiant dans ledit canal de distribution.

Selon une variante possible, lesdits moyens de détermination sont configurés pour détecter l'atteinte par ledit couple d'un seuil prédéterminé, lesdits moyens de contrôle agissant sur ladite vanne pour la faire passer dans ladite position ouverte lorsque le couple exercé sur ladite broche est au moins égal audit seuil prédéterminé, et inversement.

Selon une variante possible, le degré d'ouverture de ladite vanne varie sensiblement proportionnellement en fonction dudit couple.

Selon une variante possible, une perceuse selon l'invention comprend un moteur muni d'un rotor et une transmission ayant une entrée reliée audit rotor et une sortie reliée à ladite broche pour entrainer celle-ci en mouvement selon son axe, lesdits moyens de détermination d'au moins une information représentative du couple exercé sur ladite broche étant placés dans ladite transmission.

La transmission subi un couple proportionnel au couple subit par la broche au cours d'un perçage. Il est donc facile d'y mesurer de manière efficace une information représentative du couple exercé sur la broche au cours d'un perçage.

Selon une variante possible, ladite transmission comprend au moins un train épicycloïdal muni d'une couronne, ladite couronne étant mobile en rotation à l'intérieur du carter de ladite perceuse entre deux positions extrêmes contre l'effet de moyens de rappel élastique, une rotation de ladite couronne contre l'effet desdits moyens de rappel élastique sous l'effet d'une augmentation du couple exercé sur ladite broche s'accompagnant d'un déplacement de ladite vanne vers sa position ouverte, et inversement.

La couronne supporte un couple de réaction proportionnel à son couple de sortie de la perceuse donc proportionnel au couple supporté par le foret au niveau de la broche et résultant des efforts de coupe dans la matière. Il est donc possible de mesurer de manière efficace au niveau de la couronne une information représentative du couple exercé sur la broche au cours d'un perçage

Selon une variante possible, ladite transmission comprend au moins un train épicycloïdal muni d'un porte-satellites, ledit porte-satellites étant mobile en rotation à l'intérieur du carter de ladite perceuse contre l'effet de moyens de rappel élastique, une rotation dudit porte-satellites contre l'effet desdits moyens de rappel élastique sous l'effet d'une augmentation du couple exercé sur ladite broche s'accompagnant d'un déplacement de ladite vanne vers sa position ouverte, et inversement.

Selon une variante possible, une perceuse selon l'invention comprend un doigt entrainé en mouvement par ladite couronne ou ledit porte-satellites, ledit doigt étant mobile entre au moins :
- une position d'ouverture dudit canal d'alimentation de ladite pompe, cette position étant prise lorsque ladite couronne ou ledit porte-satellites se trouve dans une position sous l'effet d'un couple exercé sur ladite broche d'une valeur au moins égale à un seuil prédéterminé, et
- une position d'obturation dudit canal d'alimentation de ladite pompe, cette position étant prise lorsque ladite couronne ou ledit porte-satellites se trouve dans une position sous l'effet d'un couple exercé sur ladite broche d'une valeur inférieure audit seuil prédéterminé.

Le doigt permet dans ce mode de réalisation d'interdire au d'autoriser la circulation d'air comprimé en direction de la vanne pour délivrer ou non de l'air comprimé à la pompe à lubrifiant.

Selon une variante possible, une perceuse selon l'invention comprend un levier solidaire de ladite couronne ou dudit porte-satellites et agissant sur ladite vanne, ledit levier étant mobile entre au moins :
- une position d'ouverture de ladite vanne, cette position étant prise lorsque ladite couronne ou ledit porte-satellites se trouve dans une position sous l'effet d'un couple exercé sur ladite broche d'une valeur au moins égale à un seuil prédéterminé, et
- une position de fermeture de ladite vanne, cette position étant prise lorsque ladite couronne ou ledit porte-satellites se trouve dans une position sous l'effet d'un couple exercé sur ladite broche d'une valeur inférieure audit seuil prédéterminé.

Selon ce mode de réalisation, le levier agit directement sur la vanne pour interdire ou autoriser la circulation d'air comprimé en direction de la pompe à lubrifiant.

Selon une variante possible, le degré d'ouverture de ladite vanne varie en fonction du couple exercé sur ladite broche.

Il est ainsi possible de faire varier le débit d'alimentation de la pompe à lubrifiant et de débit de lubrifiant qu'elle délivre en fonction du couple exercé sur la broche qui est proportionnel aux efforts de coupe. Il est alors par exemple possible d'augmenter le débit de lubrification lorsque les efforts de coupe augmentent.

Selon une variante possible, une perceuse selon l'invention comprend des moyens de réglage du tarage desdits moyens de rappel élastiques.

Ce tarage permet s'ajuster le seuil de déclenchement de la pompe à lubrification, et d'éviter que la lubrification ne se déclenche à vide.

Selon une variante possible, ledit moteur est pneumatique, ladite perceuse comprenant au moins un canal d'alimentation en air comprimé dudit moteur auquel est relié au moins un canal d'alimentation en air comprimé de ladite pompe, ladite vanne étant disposée le long dudit canal d'alimentation en air comprimé de ladite pompe.

Le circuit d'alimentation en air comprimé du moteur sert alors également à l'alimentation de la pompe à lubrifiant, ce qui simplifie l'architecture de la perceuse.

### 5. Liste des figures

D'autres caractéristiques et avantages de l'invention apparaîtront à la lecture de la description suivante de modes de réalisation particuliers, donnée à titre de simple exemple illustratif et non limitatif, et des dessins annexés parmi lesquels :
- la figure 1 illustre une vue en perspective d'un exemple de perceuse selon l'invention ;
- la figure 2 illustre une vue en couple selon un plan transversal de la perceuse de la figure 1 ;
- les figures 3 et 4 illustrent un premier mode de réalisation de moyens de détermination d'au moins une information représentative du couple exercé en cours de perçage sur la broche ainsi que des moyens de contrôle du débit de la pompe d'une perceuse selon l'invention ;
- la figure 5 illustre un deuxième mode de réalisation de moyens de détermination d'au moins une information représentative du couple exercé en cours de perçage sur la broche ainsi que des moyens de contrôle du débit de la pompe d'une perceuse selon l'invention ;
- la figure 6 illustre un troisième mode de réalisation de moyens de détermination d'au moins une information représentative du couple exercé en cours de perçage sur la broche ainsi que des moyens de contrôle du débit de la pompe d'une perceuse selon l'invention ;
- les figures 7-18 illustrent un autre mode de réalisation dans lequel le porte satellite d'un train épicycloïdale de la transmission est monté mobile en rotation contre l'effet d'un ressort de compression pour évaluer le couple appliqué sur la broche.

### 6. Description de modes de réalisation particuliers

### 6.1. Premier mode de réalisation : tige d'obturation du canal d'alimentation de la pompe à lubrifiant

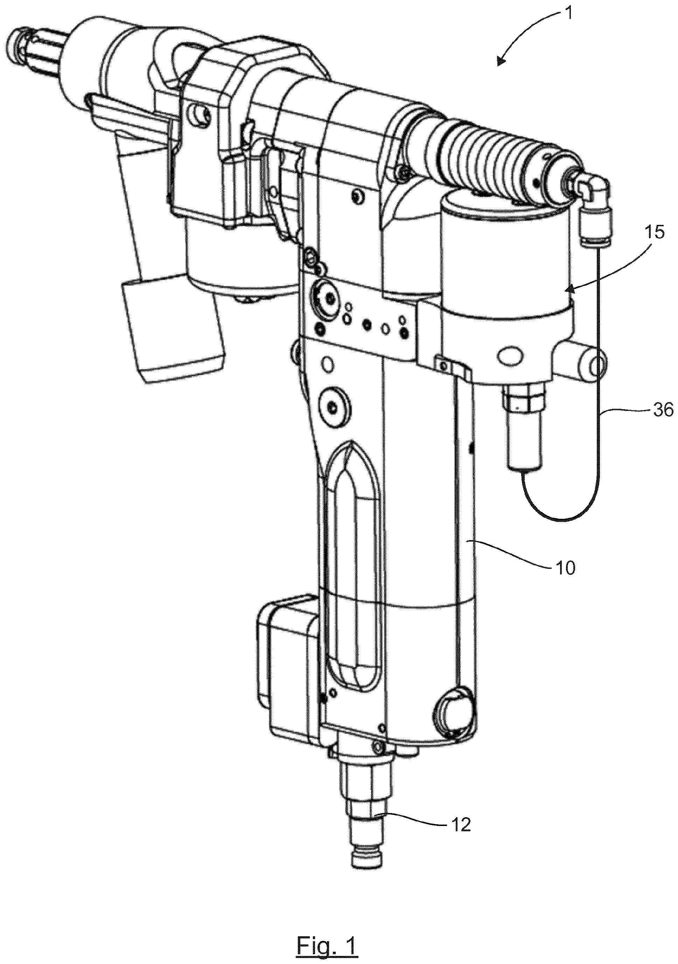

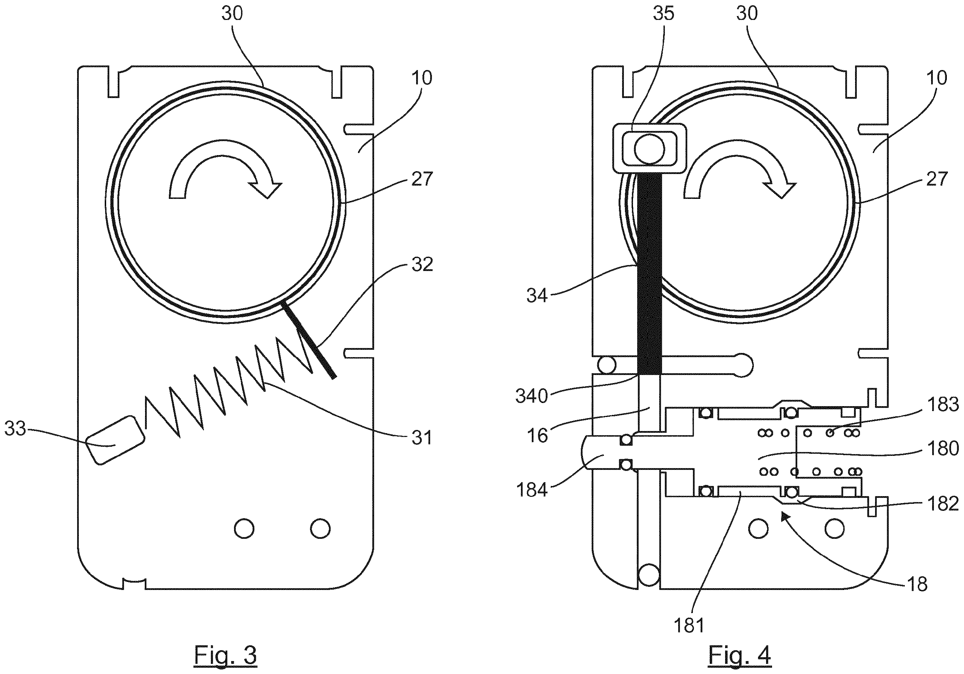

On présente, en relation avec les figures 1 à 4, un premier mode de réalisation d'une perceuse selon l'invention.

Il s'agit ici d'une perceuse à avance automatique, c'est-à-dire d'une perceuse dont la broche de perçage est susceptible d'être entrainée en rotation et en translation simultanément selon son axe longitudinal. L'invention peut toutefois être mise en œuvre pour tout type de perceuse.

Ainsi que cela est représenté, la perceuse 1 comprend un carter 10 logeant un moteur 11. Dans ce mode de réalisation, le moteur 11 est de type pneumatique II comprend un rotor 110. Le carter 10 comprend une entrée de connexion 12 à une conduite d'alimentation en air comprimé (non représentée) pour alimenter le moteur.

Le carter 10 loge également une broche de perçage 13 à l'extrémité de laquelle des moyens de fixation (non représentés) permettent d'y solidariser un outil coupant comme un foret 14. De tels moyens sont connus en soi de l'homme du métier et ne sont en conséquence pas décrits plus en détail ici.

Le carter 10 loge une transmission T dont l'entrée E est reliée au rotor 110 du moteur 11 et dont la sortie S est reliée à la broche 13.

Cette transmission T comprend classiquement un ensemble de composants capable de transformer un mouvement de rotation du rotor 110 du moteur 11 en un mouvement combiné de rotation et de translation de la broche de perçage 13 selon son axe longitudinal. La fréquence de rotation de la broche 13 et sa vitesse d'avance sont proportionnelles à la fréquence de rotation du rotor 110.

Dans l'exemple illustré, l'axe du rotor 110 et celui de la broche 13 sont orthogonaux. Dans une variante, ils pourraient être parallèles.

La perceuse 1 comprend des moyens de distribution de lubrifiant à l'outil coupant 14 solidarisé à l'extrémité de la broche 13.

Ces moyens de distribution comprennent une pompe pneumatique 15 apte à délivrer un lubrifiant dans un canal de distribution de lubrifiant 130 traversant la broche 13 et débouchant dans l'outil coupant 14, celui-ci étant également traversé par un canal débouchant (non représenté).

Cette pompe 15 est alimentée par une partie de l'air comprimé alimentant le moteur 11. Pour cela, la perceuse 1 comprend un canal d'alimentation en air comprimé 16 de la pompe à lubrifiant 15, ce canal 16 (représenté seulement en partie) étant relié au canal d'alimentation 17 du moteur 11 de la perceuse 1. Le canal 17 d'alimentation du moteur comprend une vanne de régulation 170.

Une vanne 18 d'alimentation en air comprimé de la pompe 15 est placée le long du canal d'alimentation en air comprimé 16 de la pompe 15. Cette vanne 18 comprend un piston 180 et un cylindre 181 présentant un orifice de sortie 182, le piston 180 étant mobile à l'intérieur du cylindre 181 entre au moins :
- une position fermée dans laquelle l'orifice de sortie 182 de la vanne 18 est fermé si bien que la pompe 15 n'est pas alimentée en air comprimée, et
- une position ouverte dans laquelle l'orifice de sortie 182 de la vanne 18 est ouvert si bien que la pompe 15 est alimentée en air comprimée pour distribuer du lubrifiant dans le canal de distribution 130.

Un ressort de compression 183 agit sur le piston 180 pour le ramener dans sa position fermée.

La perceuse comprend un bouton de départ cycle 19, qui lorsqu'il est enfoncé par un opérateur permet de lancer un cycle de perçage selon une stratégie préprogrammée.

Dès lors qu'un départ cycle de perçage est lancé, de l'air est admis dans la perceuse via la connexion 12 pour alimenter en air comprimé le moteur 11 selon une stratégie de perçage prédéterminée via le canal 17 et la vanne 170.

Une partie de l'air comprimé entrant dans la perceuse 1 est déviée pour alimenter le canal d'alimentation en air comprimé 16 de la pompe à lubrifiant 15. Cet air est autorisé au non à alimenter la pompe 15 selon l'état dans lequel se trouve la vanne 18.

La perceuse 1 comprend des moyens mécaniques de détermination d'au moins une information représentative du couple exercé sur la broche 13 selon son axe en cours de perçage. Comme il ressortira plus clairement par la suite, ces moyens de détermination permettent plus précisément d'évaluer le couple exercé sur la broche 13 selon son axe en cours de perçage, plutôt que d'en déterminer la valeur. Ils permettent notamment de détecter une augmentation ou une diminution de ce couple et l'atteinte par celui-ci d'une valeur seuil prédéterminée.

Des moyens de contrôle agissent sur le débit de la pompe 15 en fonction du couple exercé sur la broche 13 selon son axe en cours de perçage.

La régulation du débit de la pompe 15 peut être du type tout ou rien. Dans ce cas, la vanne 18 est soit ouverte soit fermée. Cette régulation peut alternativement permettre de faire varier progressivement le débit de la pompe 15. On peut ainsi soit passer d'un débit nul à un débit donné, soit passer d'une débit nul à un débit variable.

La transmission T comprend ici un pignon droit 20 lié en rotation avec le rotor 110 et engrenant avec un autre pignon droit 21 lui-même lié en rotation avec le solaire 22 d'un train épicycloïdal. Ce train épicycloïdal comprend une rangée de satellites 23 engrenant avec le solaire 22 et montés sur un porte satellites 24. Ce porte-satellite 24 est lié en rotation avec un arbre 26. Les satellites 23 engrènent avec la couronne 27 du train épicycloïdal. L'arbre 26 est lié en rotation avec un premier engrenage conique 28. Ce pignon conique 28 engrène avec un deuxième pignon conique 29 qui constitue l'entrée d'une partie de la transmission T configurée pour entrainer en rotation et en translation simultanément la broche de perçage 13 selon son axe. Ce type de transmission est connue en soit de l'homme du métier et n'est en conséquence pas décrit plus en détail ici.

Les moyens mécaniques de détermination d'au moins une information représentative du couple exercé sur la broche 13 selon son axe en cours de perçage sont placés dans la transmission T.

Plus précisément, la couronne 27 est mobile en rotation à l'intérieur du carter 10 de la perceuse 1 entre deux positions extrêmes contre l'effet de moyens de rappel élastique. Pour cela, des paliers à aiguille 30 ou roulements à billes au tout autres moyens de guidage en rotation adapté sont interposés entre la couronne 27 et le carter 10 de la perceuse 1. La rotation de la couronne 27 est immobilisée par un ressort 31 tel que lorsque les efforts de coupe sur le foret 14 augmentent, la charge que le ressort 31 doit supporter pour immobiliser en rotation la couronne 27 augmente provoquant une compression du ressort 31 et donc une rotation de la couronne 27. Le train épicycloïdal avec couronne flottante sous contrainte du ressort agit ainsi comme un palpeur apte à évaluer le couple supporté par le foret au niveau de la broche et résultant des efforts de coupe dans la matière.

La couronne 27 supporte un couple de réaction proportionnel à son couple de sortie donc proportionnel au couple supporté par le foret au niveau de la broche et résultant des efforts de coupe dans la matière.

Une rotation de la couronne 27 contre l'effet des moyens de rappel élastique 31 sous l'effet d'une augmentation du couple exercé sur la broche 13 s'accompagnant d'un déplacement de la vanne 18 vers sa position ouverte, et inversement.

Pour cela, la couronne 27 est par exemple solidaire d'un levier 32 en appui contre une première extrémité d'un ressort de compression 31, l'autre extrémité de celui-ci étant immobilisée à l'intérieur du carter 10. L'immobilisation de cette extrémité peut être réalisée au moyen d'une vis 33 qui pourra être plus ou moins vissée dans le carter 10 pour tarer le ressort 31 afin de régler le couple devant être encaissé par la broche 13 pour qu'elle tourne suffisamment pour que la vanne s'ouvre.

Le ressort peut être taré pour que la rotation de la couronne ne se déclenche qu'à partir d'un niveau de couple donné, ceci grâce à la vis 33 accessible au technicien en charge du réglage des outils.

Le tarage du ressort a pour but de compenser le frottement des pignons et des joints de la vanne ou encore de l'équipement, et d'éviter que la lubrification ne se déclenche à vide.

Un doigt d'obturation ou tige 34 entrainé par la couronne 27 permet d'obturer ou de libérer le canal d'alimentation 16 en air comprimé de la pompe 15 en amont de la vanne 18.

Dans ce mode de réalisation, ce doigt d'obturation 34 constitue une tige liée à la couronne 27 par une liaison glissière 35 d'axe essentiellement orthogonal à l'axe de rotation de la couronne 27 et l'axe de la tige 34. Cette tige 34 se déplace donc lorsque la couronne 27 tourne à l'intérieur du carter 10 de sorte que son extrémité 340 vienne obturer ou libérer le canal d'alimentation 16 en air comprimé de la pompe à lubrifiant 15 en amont de la vanne 18.

Plus précisément, la tige 34 est dimensionnée de telle sorte que lorsque la couronne 27 se déplace en rotation sur une plage angulaire correspondant à l'atteint par le couple auquel est soumis la broche 13 d'une valeur seuil prédéterminée, l'extrémité 340 de la tige 34 occupe une position de libération dans laquelle elle libère le canal d'alimentation 16 de la pompe à lubrifiant 15 de sorte que celle-ci est alimentée en air comprimé et délivre du lubrifiant. En dessous de cette valeur seuil, l'extrémité 340 de la tige 34 se trouve dans une position d'obturation dans laquelle elle obture le canal d'alimentation 16 si bien que la pompe 15 à lubrifiant n'est pas alimentée en air comprimé et de délivre pas de lubrifiant.

En d'autres termes, la tige 34 est mobile entre au moins :
- une position d'ouverture du canal d'alimentation 16 de la pompe 15, cette position étant prise lorsque la couronne 27 se trouve dans une position sous l'effet d'un couple exercé sur la broche 13 d'une valeur au moins égale à un seuil prédéterminé correspondant à la réalisation effective d'une action de perçage d'une pièce (enlèvement de matière), et
- une position d'obturation du canal d'alimentation 16 de la pompe 15, cette position étant prise lorsque la couronne 27 se trouve dans une position sous l'effet d'un couple exercé sur la broche 27 d'une valeur inférieure audit seuil prédéterminé.

Lorsque la tige 34 libère la circulation d'air comprimé dans le canal d'alimentation 16 de la pompe à lubrifiant 15, l'air comprimé agit en premier lieu sur la vanne 18 pour déplacer son piston 180 dans le cylindre 181 depuis sa position fermée à sa position ouverte, autorisant ainsi l'acheminement d'air comprimé vers la pompe 15 à travers l'orifice de sortie 182 et le canal 16.

La pompe 15 comprend un cylindre 151 dans lequel est monté mobile en translation un piston 152 dont l'axe 153 est traversé par un canal 154 débouchant au moyen d'un orifice 155 dans le cylindre 151 d'un côté du piston 152. Le canal d'alimentation en air comprimé 16 de la pompe 15 débouche dans le canal 154 traversant l'axe du piston 152 de la pompe 15. De l'autre côté du piston 152, le cylindre 151 contient du lubrifiant.

Ainsi, dès lors que le couple exercé sur la broche 13 au cours d'une opération de perçage atteint une valeur seuil correspondant à la réalisation effective d'un perçage, la couronne 27 atteint une position dans le carter 10 dans laquelle la tige 34 occupe sa position d'ouverture (ou de libération) et permet ainsi à l'air comprimé de placer la vanne 18 dans sa position ouverte si bien que l'air comprimé s'écoule dans le canal 16 d'alimentation de la pompe 15 puis dans le canal 154 traversant l'axe du piston 152 de la pompe 15 pour se déverser dans le cylindre 151 du côté du piston en communication avec l'orifice 155 de la pompe 15 et d'y déplacer le piston 152. Sous l'effet du déplacement du piston 152 en direction de la partie du cylindre 151 contenant le lubrifiant, du lubrifiant s'écoule à travers la sortie 156 du cylindre 151 et rejoint, au moyen d'une conduite 36, le canal de distribution 130 traversant la broche 13 jusqu'à alimenter le foret 14. Le lubrifiant se déverse alors dans la zone de perçage via le foret 14.

Dès lors qu'une action de perçage, c'est-à-dire un enlèvement de matière :
- n'a pas commencée, ce qui signifie que le foret 14 est en phase d'approche vers la pièce à percer,
- ou s'achève, par exemple au cours d'un débouchage du foret 14 en dehors de la pièce percée, ou bien que le foret 14 recul en dehors d'un perçage réalisé,
le couple exercé sur la broche 13 n'est pas suffisant pour déplacer la couronne 27. La tige 34 reste dans sa position d'obturation. La pompe à lubrifiant 15 n'est alors pas alimentée en air comprimé et ne délivre pas de lubrifiant.

Le piston 180 de la vanne 18 peut comprendre un bouton 184 permettant à un opérateur d'ouvrir ou de fermer la vanne manuellement pour tester la pompe à lubrifiant.

### 6.2. Deuxième mode de réalisation : doigt agissant sur la vanne sans modulation de débit

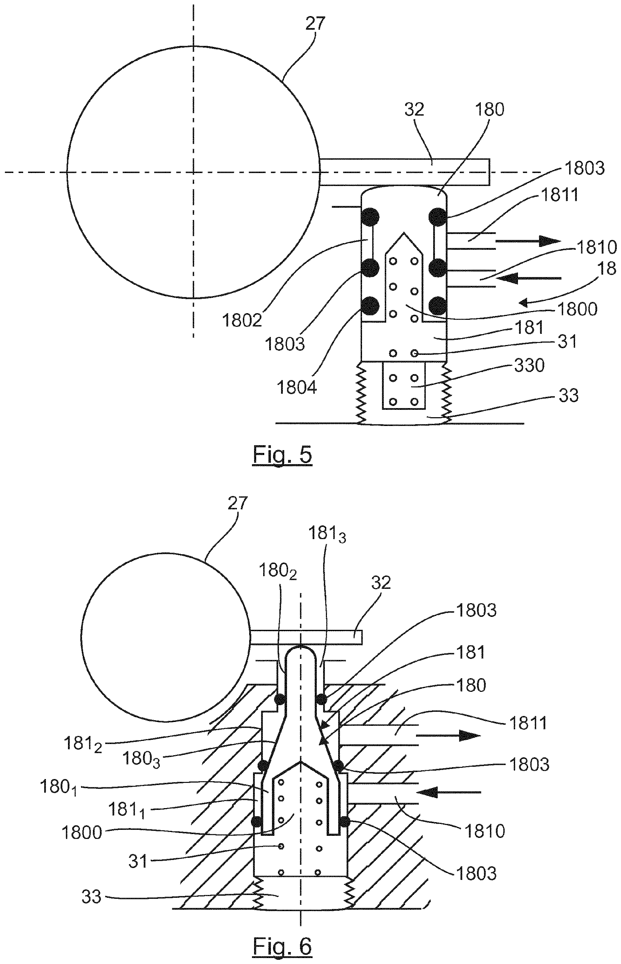

On présente en relation avec la figure 5 un deuxième mode de réalisation dans lequel le levier 32 solidaire de la couronne 27 agit directement sur le piston 180 de la vanne 18 pour la déplacer de l'une à l'autre de ses positions ouverte ou fermée.

Seules les principales différences entre le premier et ce second mode de réalisation sont décrites ci-après.

La vanne 18 comprend ici un piston cylindrique 180 à l'intérieur duquel est ménagé le long de son axe longitudinal un trou borgne 1800 logeant une extrémité d'un ressort 31, l'autre extrémité de celui-ci étant logée dans un logement 330 prévu à cet effet dans une vis de tarage 33.

Le piston 180 est mobile en translation dans un cylindre 181. Il comporte une gorge circonférentielle 1802 de part et d'autre de laquelle sont disposés deux joints toriques 1803. Un autre joint torique 1804 est placé autour du piston 181 en amont des premiers 1803.

Le levier 32 est mobile entre au moins :
- une position d'ouverture de la vanne 18, cette position étant prise lorsque la couronne 27 se trouve dans une position sous l'effet d'un couple exercé sur la broche 13 d'une valeur au moins égale à un seuil prédéterminé correspondant à la réalisation effective d'une action de perçage d'une pièce (enlèvement de matière), et
- une position de fermeture de la vanne 18, cette position étant prise lorsque la couronne 27 se trouve dans une position sous l'effet d'un couple exercé sur la broche 13 d'une valeur inférieure audit seuil prédéterminé.

Le cylindre 181 comprend une entrée d'air comprimé 1810 et une sortie d'air comprimé 1811.

Lorsque la vanne 18 est dans sa position de fermeture, le piston 180 est placé de manière telle que l'entrée d'air 1810 du cylindre 181 débouche entre deux joints toriques 1803, 1804 en dehors de la gorge 1802 si bien que l'air comprimé ne peut s'écouler à travers la sortie 1811 du cylindre 181 en direction de la pompe 15.

Lorsque la vanne 18 est dans sa position d'ouverture, le piston 180 est placé de manière telle que l'entrée d'air 1810 du cylindre 181 débouche entre deux joints toriques 1803 dans la gorge 1802 si bien que l'air comprimé peut s'écouler à travers la sortie 1811 du cylindre 181 en direction de la pompe 15.

Ici le piston 180 et le ressort 31 sont coaxiaux ce qui permet de simplifier la solution et la rendre plus compacte.

Ce mode de réalisation comporte un autre avantage : le dessin du piston 180 est tel que la pression d'alimentation de la pompe 15 ne génère pas de force axiale sur le piston 180 et donc ne perturbe pas le comportement du ressort 31 qui reste soumis au couple de réaction de la couronne 27 seul. En effet la pression d'air est admise dans une gorge 1802 du piston 180, les faces de cette gorge 1802 étant de surfaces égales et opposées l'une à l'autre. Ainsi, l'air comprimé exerce sur ces surfaces des efforts de norme identique et de directions opposées qui s'annulent ne perturbant pas le fonctionnement du ressort 31 et la détection de l'atteinte par le couple auquel est soumis la broche d'une valeur seuil signifiant que le foret est en action de perçage.

Le piston 180 de la vanne 18 peut comprendre un bouton (non représenté) permettant à un opérateur d'ouvrir ou de fermer la vanne manuellement pour tester la pompe à lubrifiant.

La vanne 18 de ce mode de réalisation peut venir en substitution ou en complément de la vanne 18 du premier mode de réalisation, laquelle pourra ne pas mettre en œuvre les moyens de contrôle lorsque les deux vannes seront mises en œuvre ensemble.

### 6.3. Troisième mode de réalisation : doigt agissant sur la vanne avec modulation de débit

On présente en relation avec la figure 6 un troisième mode de réalisation dans lequel le levier 32 agit directement sur le piston 180 de la vanne 18 pour le déplacer de l'une à l'autre de ses positions ouverte ou fermée, comme dans le second mode de réalisation. Toutefois, le débit d'alimentation de la pompe 15 en air comprimé, et donc son débit de distribution de lubrifiant, sont modulés selon la position de la vanne 18 en fonction du couple exercé sur la broche 13.

Seules les principales différences entre les premiers et second modes de réalisation et ce troisième mode de réalisation sont décrites ci-après.

La vanne 18 comprend ici un piston 180 à l'intérieur duquel est ménagé le long de son axe longitudinal un trou borgne 1800 logeant une extrémité d'un ressort 31, l'autre extrémité de celui-ci étant en appui contre une vis de tarage 33.

Le piston 180 comprend deux parties d'extrémité essentiellement cylindriques 180₁, 180₂ jointent par une partie tronconique 180₃.

Il porte trois joints toriques 1803. Deux joints toriques 1803 sont placés autour du piston 180 essentiellement de part et d'autre de la partie tronconique 180₃. L'autre joint torique 1803 est placé à l'extrémité d'une des parties cylindriques 180₁.

Le piston 180 est mobile en translation dans un cylindre 181 étagé comprenant une partie de fort diamètre 181₁ logeant essentiellement la partie cylindrique 180₁ de fort diamètre du piston 180, et une partie de plus faible diamètre 181₂ logeant essentiellement la partie tronconique 180₃ du piston 180. Il est traversé par un passage 181₃ pour la partie cylindrique de faible diamètre 180₂ du piston 180, ce passage logeant l'un des joints toriques 1803.

Le levier 32 est mobile entre au moins :
- une position d'ouverture de la vanne 18, cette position étant prise lorsque la couronne 27 se trouve dans une position sous l'effet d'un couple exercé sur la broche 13 d'une valeur au moins égale à un seuil prédéterminé correspondant à la réalisation effective d'une action de perçage d'une pièce (enlèvement de matière), et
- une position de fermeture de la vanne 18, cette position étant prise lorsque la couronne 27 se trouve dans une position sous l'effet d'un couple exercé sur la broche 13 d'une valeur inférieure audit seuil prédéterminé.

Le cylindre 181 comprend une entrée d'air 1810 comprimé qui débouche dans la partie de fort diamètre 181₁ du cylindre 181 et une sortie d'air comprimé 1811 qui débouche dans la partie de faible diamètre 181₂ du cylindre 181.

Lorsque la vanne 18 est dans sa position de fermeture, le piston 180 est placé de manière telle que l'entrée d'air 1810 du cylindre 181 débouche entre les joints toriques 1803 situés de part et d'autre de la partie cylindrique de fort diamètre 180₁ du piston 180 si bien que l'air comprimé ne peut s'écouler à travers la sortie 1811 du cylindre 181 en direction de la pompe 15. La pompe 15 ne délivre alors pas de lubrifiant.

Lorsque la vanne 18 est dans sa position d'ouverture, le piston 180 est placé de manière telle que l'entrée d'air 1810 du cylindre 181 débouche entre deux joints toriques 1803 placés de part et d'autre de la partie tronconique 180₃ du piston 180 si bien que l'air comprimé peut s'écouler à travers la sortie 1811 du cylindre 181 en direction de la pompe. La pompe 15 délivre alors du lubrifiant.

Compte tenu de la mise en œuvre du piston 180 à portion tronconique 180₃, cette vanne 18 permet de moduler, en fonction des efforts de coupe, le débit d'alimentation de la pompe à lubrifiant 15, et ainsi le débit de distribution de lubrifiant.

En effet, plus les efforts de coupe sont importants au cours d'un perçage, plus la couronne 27 se déplace à l'intérieur du carter 10 et plus le doigt 34 enfonce le piston 180 dans le cylindre 181. La section de passage de l'air comprimé dans la vanne 18 est alors d'autant plus élevée que les efforts de coupe sont importants. On peut ainsi faire varier de niveau de lubrification sensiblement proportionnellement aux efforts de coupe.

Cette solution pourrait permettre de faire varier le débit de lubrification en fonction de la matière percée.

En effet un perçage réalisé dans du Titane génère des efforts de coupe plus élevés que dans un alliage d'aluminium et requière une lubrification plus importante. Cette conception permettrait un plus grand débit de lubrification pour les matières générant les plus grands efforts de coupe.

Le piston 180 de la vanne 18 peut comprendre un bouton (non représenté) permettant à un opérateur d'ouvrir ou de fermer la vanne manuellement pour tester la pompe à lubrifiant.

La vanne 18 de ce mode de réalisation peut venir en substitution ou en complément de la vanne 18 du premier mode de réalisation, laquelle pourra ne pas mettre en œuvre les moyens de contrôle lorsque les deux vannes seront mises en œuvre ensemble.

### 6.4. Quatrième mode de réalisation : porte-satellites mobile pour réguler le débit de la pompe

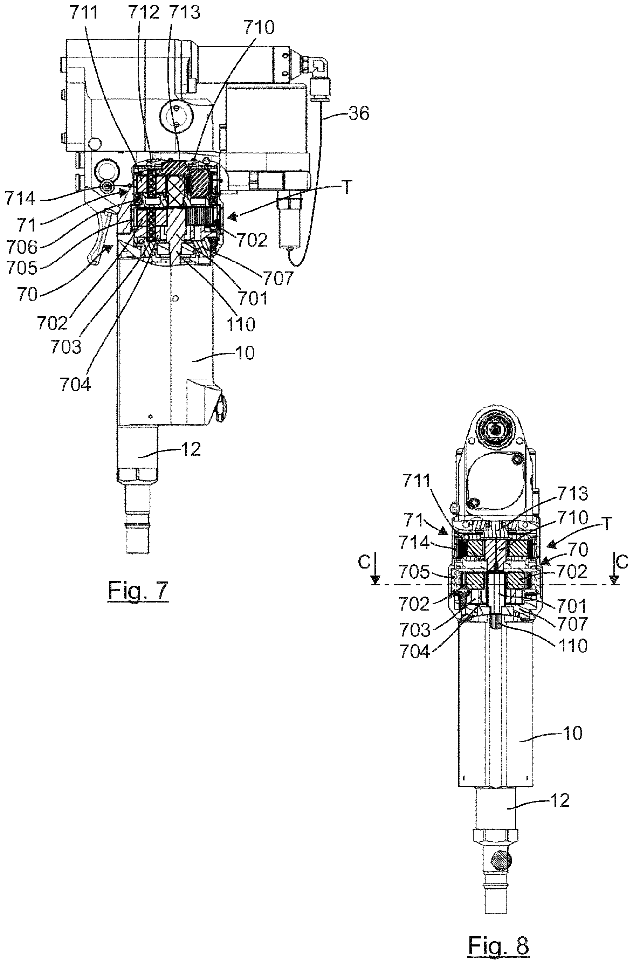

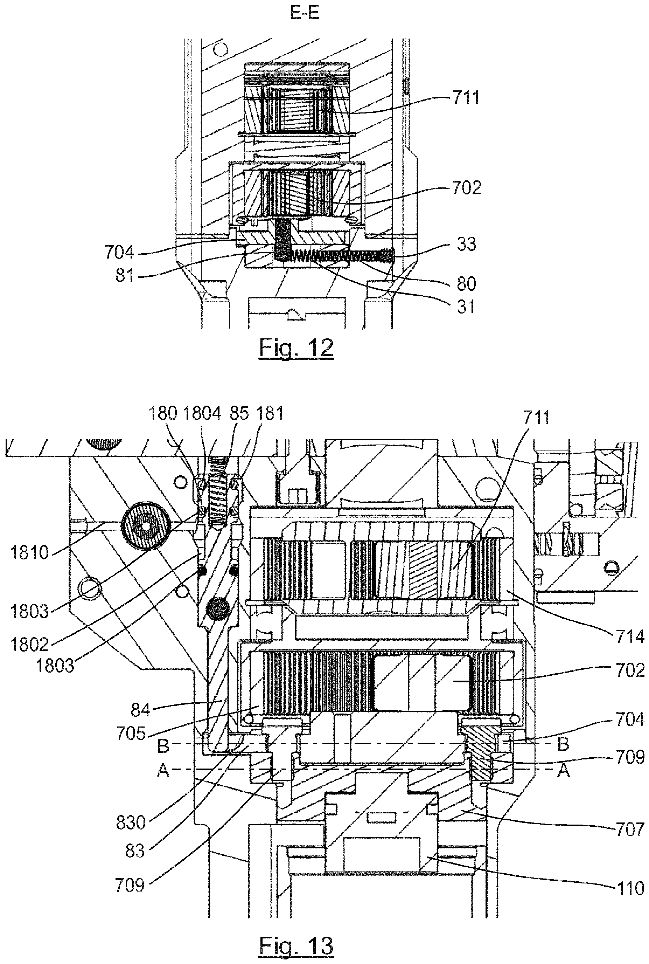

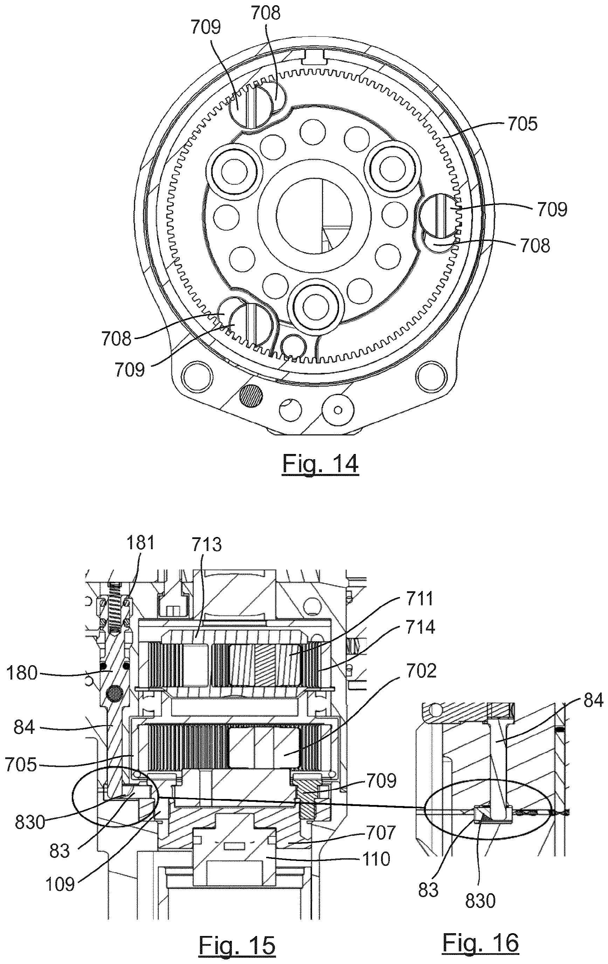

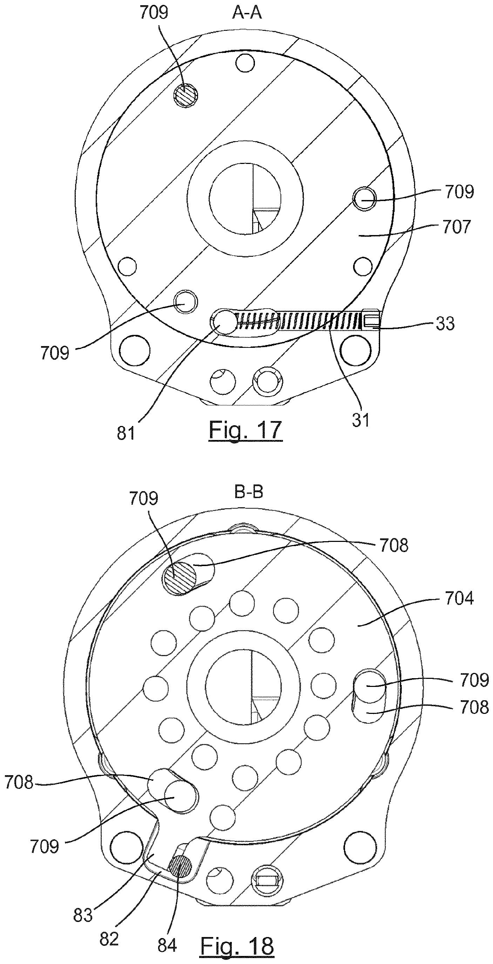

On décrit, en relation avec les figures 7 à 18, un autre mode de réalisation.

Seules les principales différences entre ce mode de réalisation et les précédents sont décrites ici.

La figure 7 illustre une vue en coupe partielle d'une perceuse selon l'invention montrant la réduction située en sortie du moteur pneumatique.

Dans ce mode de réalisation, la transmission T comprend un premier 70 et un deuxième 71 étages épicycloïdaux. Ces deux étages sont placés entre le rotor 110 et l'ensemble de composants capable de transformer un mouvement de rotation du rotor 110 du moteur 11 en un mouvement combiné de rotation et de translation de la broche de perçage 13 selon son axe longitudinal.

Le premier étage 70 comprend un premier solaire 701 solidaire en rotation du rotor 110. Ce premier solaire 701 engrène avec des premiers satellites 702 montés mobiles en rotation sur des axes 703 solidaires d'un premier porte-satellites 704.

Les premiers satellites 702 engrènent avec une première couronne 705 montée mobile en rotation à l'intérieur du carter 10 au moyen d'un palier 706 par exemple à roulement à billes.

La première couronne 705 est solidaire en rotation du deuxième solaire 710 du deuxième étage épicycloïdal 71.

Le deuxième solaire 710 engrène avec des deuxièmes satellites 711 montés mobiles en rotation sur des axes 712 portés par un deuxième porte-satellites 713. Les deuxièmes satellites 711 engrènent également avec une deuxième couronne 714 montée fixe dans le carter 10.

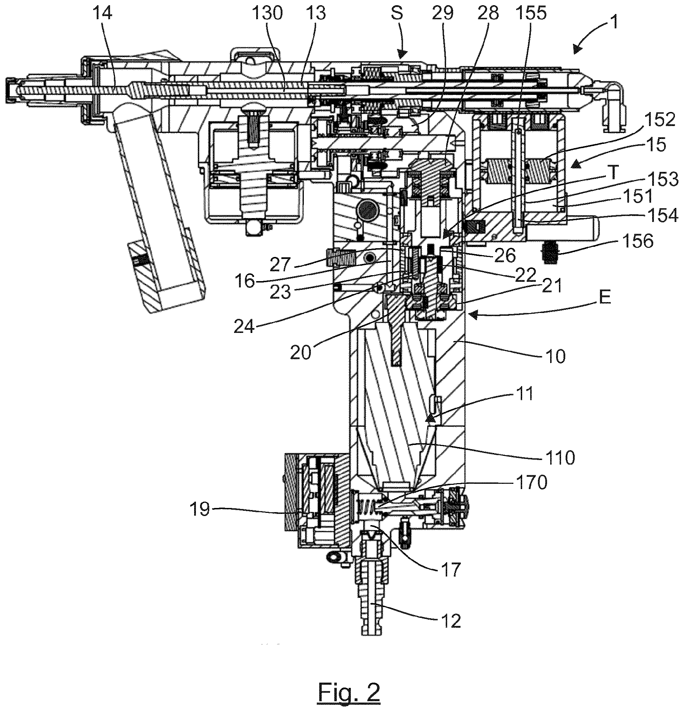

Le deuxième porte-satellites 713 est lié en rotation avec le premier engrenage conique 28 (cf. figure 2).

Le premier porte-satellites 704 est monté sur un plateau 707 monté fixe dans le carter 10.

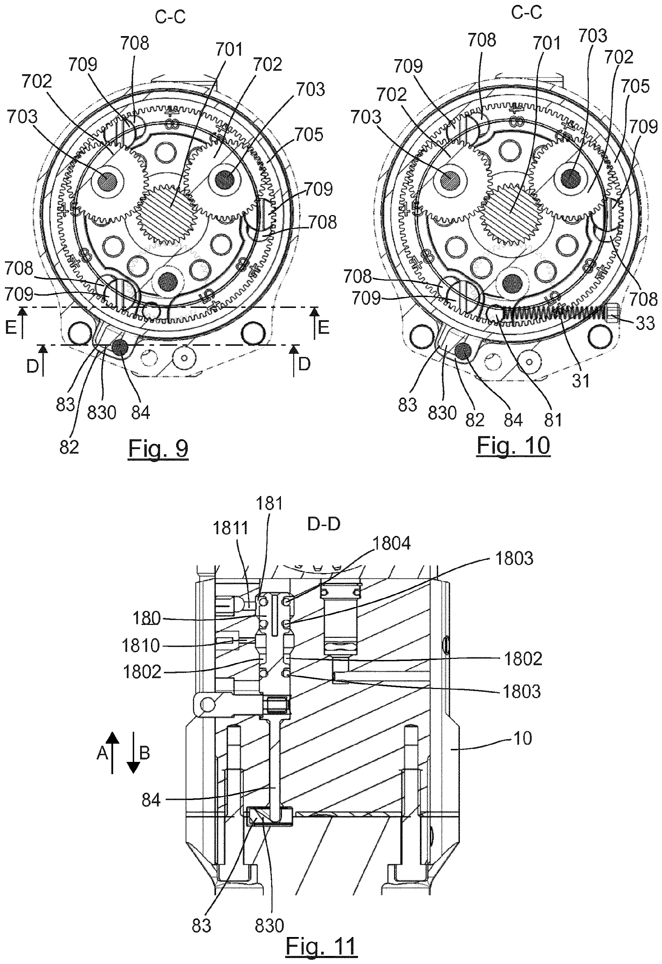

Ainsi que cela est représenté à la figure 9, le premier porte satellites est traversé par des rainures oblongues 708 uniformément réparties et s'étendant autour de l'axe de rotation du premier porte satellites 704.

Ces rainures oblongues 708 permettent chacune le passage d'une vis épaulée 709 permettant de lier en translation suivant l'axe du moteur le premier porte satellites 704 au plateau fixe 707 tout en lui permettant de tourner par rapport au plateau fixe 707 autour de son axe de rotation qui est parallèle aux axes de rotation des premiers satellites 702 dans la limite de la plage angulaire de déplacement délimitée par les parois latérales des rainures 708.

Un ressort de compression 31 passe à travers un orifice 80 qui s'étend à travers le carter 10 et le plateau fixe 707. Ce ressort 31 est interposé entre une vis de tarage 33 dont la tête s'étend à la surface du carter 10 et un pion 81 solidaire du premier porte-satellites 704.

Le premier porte-satellites 704 comprend une excroissance latérale 83 qui s'étend à l'intérieur d'une réservation 82 ménagée à cet effet dans le carter 10.

Cette excroissance latérale 83 présente une rampe d'entrainement inclinée 830.

Le piston 180 de la vanne 18 se prolonge par une tige 84 dont l'extrémité vient en appui contre l'excroissance latérale 83.

Le premier porte-satellites 704 est ainsi monté mobile en rotation à l'intérieur du carter 10 contre l'effet du ressort de compression 31.

Ainsi, lorsqu'au cours d'une opération de perçage, le couple de réaction supporté par le premier porte satellite 704, qui est proportionnel au couple supporté par le foret due aux efforts de coupe, devient supérieur à une valeur seuil prédéterminée correspondant à la réalisation effective d'une opération de perçage, le ressort 31 se comprime et le premier porte satellites 704 tourne par rapport à la platine fixe 707. Au cours de ce mouvement, l'excroissance latérale 83 qui est solidaire du premier porte satellites 704 tourne également dans la réservation 82 si bien que l'extrémité de la tige 84 du piston 180, maintenue en contact contre la rampe 830 au moyen d'un ressort 85, glisse contre la surface de la rampe 830.

Cette rampe 830 permet de transformer un mouvement de rotation du premier porte-satellites 704 en un mouvement de translation du piston 180. En effet, lorsque le premier porte-satellites 704 tourne par rapport à la platine fixe 707 sous l'effet d'une augmentation des efforts de coupe supportés par le foret, la rampe 830 tend à déplacer le piston 180 selon la flèche A pour ouvrir la vanne 18 en mettant en communication l'entrée 1810 et la sortie 1811 d'air via la gorge 1802. A l'inverse, lorsque le premier porte-satellites 704 tourne par rapport à la platine fixe 707 sous l'effet d'une baisse des efforts de coupe supportés par le foret, la rampe 830 tend à déplacer le piston 180 selon la flèche B pour fermer la vanne 18 en coupant la communication l'entrée 1810 et la sortie 1811 d'air.

Le système à porte-satellites flottant peut être mis en œuvre à la place du système à couronne flottante dans les trois précédents modes de réalisation décrits en relation avec la couronne flottante (tige d'obturation, et doigt avec ou sans modulation de débit).

### 6.4. Avantages

La technique selon l'invention permet, selon l'un ou l'autre des modes de réalisation, de ne délivrer du lubrifiant au foret seulement lorsqu'il est en action de perçage (enlèvement de matière) mais pas lorsque la perceuse tourne à vide ou lors des phases d'approche, de recul ou de débouchage. On limite ainsi la consommation de lubrifiant aux seules phases qui en requiert, on évite de polluer la zone de perçage et de devoir mettre en œuvre des campagnes de nettoyage pour y remédier. La technique selon l'invention permet ainsi de réduire le coût inhérent à la lubrification d'un foret lors d'un perçage.

La technique selon le troisième mode de réalisation permet en outre d'adapter le débit de lubrification aux efforts de coupes de sorte à augmenter le débit de lubrification lors du perçage de matériaux induisant des efforts de coupe plus élevés et requérant davantage de lubrifiant.

## Revendications

1. Perceuse (1) comprenant une broche de perçage (13) apte à entrainer en mouvement un outil coupant (14), ladite perceuse comprenant au moins un canal de distribution d'un lubrifiant (130) audit outil coupant (14), une pompe (15) d'alimentation dudit canal (130) en lubrifiant et des moyens de contrôle du débit de ladite pompe (15), **caractérisée en ce qu'**elle comprend des moyens mécaniques (27, 31, 32) de détermination d'au moins une information représentative du couple exercé sur ladite broche (13) selon son axe en cours de perçage, lesdits moyens de contrôle de ladite pompe agissant sur le débit de ladite pompe (15) en fonction du couple exercé sur ladite broche (13) selon son axe en cours de perçage.

2. Perceuse selon la revendication 1 dans laquelle lesdits moyens de détermination sont configurés pour évaluer ledit couple.

3. Perceuse selon la revendication 1 ou 2 dans laquelle ladite pompe (15) est pneumatique et lesdits moyens de contrôle comprennent au moins une vanne (18) d'alimentation en air comprimé de ladite pompe (15), ladite vanne (18) étant mobile entre au moins :
- une position fermée dans laquelle ladite pompe (15) n'est pas alimentée en air comprimée, et
- une position ouverte dans laquelle ladite pompe (15) est alimentée en air comprimée pour distribuer ledit lubrifiant dans ledit canal de distribution (130).

4. Perceuse selon la revendication 3 dans laquelle lesdits moyens de détermination sont configurés pour détecter l'atteinte par ledit couple d'un seuil prédéterminé, lesdits moyens de contrôle agissant sur ladite valve pour la faire passer dans ladite position ouverte lorsque le couple exercé sur ladite broche (13) est au moins égal audit seuil prédéterminé, et inversement.

5. Perceuse selon la revendication 4 dans laquelle le degré d'ouverture de ladite valve varie sensiblement proportionnellement en fonction dudit couple.

6. Perceuse selon l'une quelconque des revendications 1 à 5 comprenant un moteur (11) muni d'un rotor (110) et une transmission (T) ayant une entrée (E) reliée audit rotor (110) et une sortie (S) reliée à ladite broche (13) pour entrainer celle-ci en mouvement selon son axe, lesdits moyens de détermination d'au moins une information représentative du couple exercé sur ladite broche étant placés dans ladite transmission.

7. Perceuse selon l'une quelconque des revendications 3 à 5 dans laquelle ladite transmission comprend au moins un train épicycloïdal muni d'une couronne (27), ladite couronne (27) étant mobile en rotation à l'intérieur du carter (10) de ladite perceuse (1) entre deux positions extrêmes contre l'effet de moyens de rappel élastique (31), une rotation de ladite couronne (27) contre l'effet desdits moyens de rappel élastique (31) sous l'effet d'une augmentation du couple exercé sur ladite broche (13) s'accompagnant d'un déplacement de ladite vanne (18) vers sa position ouverte, et inversement.

8. Perceuse selon l'une quelconque des revendications 3 à 5 dans laquelle ladite transmission comprend au moins un train épicycloïdal muni d'un porte-satellites, ledit porte-satellites étant mobile en rotation à l'intérieur du carter (10) de ladite perceuse (1) contre l'effet de moyens de rappel élastique (31), une rotation dudit porte-satellites (27) contre l'effet desdits moyens de rappel élastique (31) sous l'effet d'une augmentation du couple exercé sur ladite broche (13) s'accompagnant d'un déplacement de ladite vanne (18) vers sa position ouverte, et inversement.

9. Perceuse selon la revendication 7 ou 8 comprenant un canal d'alimentation (16) en air comprimé de ladite pompe (15) et un doigt (34) entrainé en mouvement par ladite couronne (27) ou ledit porte-satellites, ledit doigt (34) étant mobile entre au moins :
- une position d'ouverture dudit canal (16) d'alimentation de ladite pompe (15), cette position étant prise lorsque ladite couronne (27) ou ledit porte-satellites se trouve dans une position sous l'effet d'un couple exercé sur ladite broche (13) d'une valeur au moins égale à un seuil prédéterminé, et
- une position d'obturation dudit canal (16) d'alimentation de ladite pompe (15), cette position étant prise lorsque ladite couronne (27) ou ledit porte-satellites se trouve dans une position sous l'effet d'un couple exercé sur ladite broche (13) d'une valeur inférieure audit seuil prédéterminé.

10. Perceuse selon les revendications 7 ou 8 comprenant un levier (32) solidaire de ladite couronne (27) ou dudit porte-satellites et agissant sur ladite vanne (18), ledit levier (32) étant mobile entre au moins :
- une position d'ouverture de ladite vanne (18), cette position étant prise lorsque ladite couronne (27) ou ledit porte-satellites se trouve dans une position sous l'effet d'un couple exercé sur ladite broche (130) d'une valeur au moins égale à un seuil prédéterminé, et
- une position de fermeture de ladite vanne (18), cette position étant prise lorsque ladite couronne (27) ou ledit porte-satellites se trouve dans une position sous l'effet d'un couple exercé sur ladite broche (13) d'une valeur inférieure audit seuil prédéterminé.

11. Perceuse selon l'une quelconque des revendications 7 à 10 comprenant des moyens de réglage (33) du tarage desdits moyens de rappel élastiques (31).

12. Perceuse selon l'une quelconque des revendications 6 à 11 dans laquelle ledit moteur (11) est pneumatique, ladite perceuse (1) comprenant au moins un canal (17) d'alimentation en air comprimé dudit moteur (11) auquel est relié au moins un canal (16) d'alimentation en air comprimé de ladite pompe (15), ladite vanne (18) étant disposée le long dudit canal (16) d'alimentation en air comprimé de ladite pompe (15).

## Patentansprüche

1. Bohrmaschine (1) mit einer Bohrspindel (13), die ein Schneidwerkzeug (14) in Bewegung versetzen kann, wobei die Bohrmaschine mindestens einen Kanal (130) zum Verteilen eines Schmiermittels auf das Schneidwerkzeug (14), eine Pumpe (15) zum Versorgen des Kanals (130) mit Schmiermittel und Mittel zum Steuern der Durchflussmenge der Pumpe (15) umfasst,
**dadurch gekennzeichnet, dass** sie mechanische Mittel (27, 31, 32) zum Bestimmen mindestens einer Information umfasst, die repräsentativ für das auf die Spindel (13) während des Bohrens entlang ihrer Achse ausgeübte Drehmoment ist, wobei die Mittel zum Steuern der Pumpe, die auf die Fördermenge der Pumpe (15) als Funktion des auf die Spindel (13) entlang ihrer Achse während des Bohrens ausgeübten Drehmoments einwirken.

2. Bohrmaschine nach Anspruch 1, wobei die Bestimmungsmittel dazu eingerichtet sind, das Drehmoment zu bewerten.

3. Bohrmaschine nach Anspruch 1 oder 2, wobei die Pumpe (15) pneumatisch ist und die Steuermittel mindestens ein Ventil (18) zum Zuführen von Druckluft zu der Pumpe (15) aufweisen, wobei das Ventil (18) zwischen mindestens:
- einer geschlossenen Position, in der die Pumpe (15) nicht mit Druckluft versorgt wird, und
- einer offenen Position, in der die Pumpe (15) mit Druckluft zum Verteilen des Schmierstoffs in dem Verteilerkanal (130) versorgt wird, beweglich ist.

4. Bohrmaschine nach Anspruch 3, wobei die Bestimmungsmittel dazu eingerichtet sind, das Erreichen eines vorbestimmten Schwellenwerts des Drehmoments zu erfassen, wobei die Steuermittel auf das Ventil einwirken, um es in die offene Position zu bewegen, wenn das auf die Spindel (13) ausgeübte Drehmoment mindestens gleich dem vorbestimmten Schwellenwert ist, und umgekehrt.

5. Bohrmaschine nach Anspruch 4, wobei der Öffnungsgrad des Ventils im Wesentlichen proportional abhängig vom Drehmoment variiert.

6. Bohrmaschine nach einem der Ansprüche 1 bis 5, mit einem Motor (11), der mit einem Rotor (110) und einem Getriebe (T) versehen ist, das einen Eingang (E) aufweist, der mit dem Rotor (110) verbunden ist, und einen Ausgang (S), der mit der Spindel (13) verbunden ist, um jene entlang ihrer Achse in Bewegung zu versetzen, wobei die Mittel zum Bestimmen mindestens einer für das auf die Spindel ausgeübte Drehmoment repräsentativen Information in dem Getriebe angeordnet sind.

7. Bohrmaschine nach einem der Ansprüche 3 bis 5, wobei das Getriebe mindestens einen epizyklischen Zug umfasst, der mit einer Krone (27) versehen ist, wobei die Krone (27) innerhalb des Gehäuses (10) der Bohrmaschine (1) zwischen zwei extremen Positionen gegen die Wirkung von elastischen Rückstellmitteln (31) drehbar beweglich ist, wobei eine Drehung der Krone (27) gegen die Wirkung der elastischen Rückstelleinrichtung (31) unter der Wirkung einer Erhöhung des auf die Spindel (13) ausgeübten Drehmoments begleitet wird von einer Verschiebung des Ventils (18) in Richtung seiner offenen Position, und umgekehrt.

8. Bohrmaschine nach einem der Ansprüche 3 bis 5, wobei das Getriebe mindestens einen epizyklischen Zug umfasst, der mit einem Planetenträger versehen ist, wobei der Planetenträger innerhalb des Gehäuses (10) der Bohrmaschine (1) gegen die Wirkung von elastischen Rückstellmitteln (31) drehbar beweglich ist, wobei eine Drehung des Planetenträgers (27) gegen die Wirkung der elastischen Rückstellmittel (31) unter der Wirkung einer Erhöhung des auf die Spindel (13) ausgeübten Drehmoments begleitet wird von einer Verschiebung des Ventils (18) in seine offene Position, und umgekehrt.

9. Bohrmaschine nach Anspruch 7 oder 8, mit einem Kanal (16) zum Zuführen von Druckluft zu der Pumpe (15) und einem Finger (34), der von der Krone (27) oder dem Planetenträger in Bewegung versetzt wird, wobei der Finger (34) mindestens beweglich ist zwischen:
- einer Öffnungsposition des Zuführkanals (16) der Pumpe (15), wobei diese Position eingenommen wird, wenn sich die Krone (27) oder der Planetenträger in einer Position unter der Wirkung eines auf die Spindel (13) ausgeübten Drehmoments mit einem Wert von mindestens gleich einem vorbestimmten Schwellenwert befindet, und
- eine Schließposition des Zuführkanals (16) der Pumpe (15), wobei diese Position eingenommen wird, wenn sich die Krone (27) oder der Satellitenhalter in einer Position unter der Wirkung eines auf die Spindel (13) ausgeübten Drehmoments mit einem Wert, der niedriger als der vorgegebene Schwellenwert ist, befindet.

10. Bohrmaschine nach Anspruch 7 oder 8, mit einem Hebel (32), der mit der Krone (27) oder dem Planetenträger fest verbunden ist und auf das Ventil (18) wirkt, wobei der Hebel (32) mindestens beweglich ist zwischen:
- einer Öffnungsposition des Ventils (18), wobei die Position eingenommen wird, wenn sich die Krone (27) oder der Satellitenhalter in einer Position unter der Wirkung eines auf die Spindel (130) ausgeübten Drehmoments mit einem Wert, der mindestens gleich einem vorbestimmten Schwellenwert ist, befindet, und
- eine Schließposition des Ventils (18), wobei diese Position eingenommen wird, wenn sich die Krone (27) oder der Planetenträger in einer Position unter der Wirkung eines auf die Spindel (13) ausgeübten Drehmoments mit einem Wert befindet, der unterhalb des vorbestimmten Schwellenwerts liegt.

11. Bohrmaschine nach einem der Ansprüche 7 bis 10, mit Mitteln (33) zum Einstellen der Tarierung der elastischen Rückstellmittel (31).

12. Bohrmaschine nach einem der Ansprüche 6 bis 11, in dem der Motor (11) pneumatisch ist, wobei die Bohrmaschine (1) mindestens einen Kanal (17) zum Zuführen von Druckluft zu dem Motor (11) umfasst, mit dem mindestens ein Kanal (16) zum Zuführen von Druckluft zu der Pumpe (15) verbunden ist, wobei das Ventil (18) entlang des Kanals (16) zum Zuführen von Druckluft zu der Pumpe (15) angeordnet ist.

## Claims

1. Drill (1) comprising a drill spindle (13) capable of driving a cutting tool (14) such that it moves, said drill comprising at least one channel for distributing a lubricant (130) to said cutting tool (14), a pump (15) for supplying said channel (130) with lubricant and control means for controlling the flow rate of said pump (15),
**characterised in that** it comprises mechanical means (27, 31, 32) for determining at least one piece of information representing the torque exerted on said spindle (13) along the axis thereof during drilling, said control means of said pump acting on the flow rate of said pump (15) as a function of the torque exerted on said spindle (13) along the axis thereof during drilling.

2. Drill according to claim 1, wherein said determination means are configured to assess said torque.

3. Drill according to claim 1 or 2, wherein said pump (15) is pneumatic and said control means comprise at least one valve (18) for supplying compressed air to said pump (15), said valve (18) being capable of moving between at least:
- a closed position in which said pump (15) is not supplied with compressed air, and
- an open position in which said pump (15) is supplied with compressed air in order to distribute said lubricant in said distribution channel (130).

4. Drill according to claim 3, wherein said determination means are configured to detect the attaining of a predetermined threshold by said torque, said control means acting on said valve to make the latter pass into said open position when the torque exerted on said spindle (13) is at least equal to said predetermined threshold, and vice versa.

5. Drill according to claim 4, wherein the degree of opening of said valve varies substantially proportionately as a function of said torque.

6. Drill according to any of claims 1 to 5, comprising a motor (11) provided with a rotor (110) and a transmission (T) having an input (E) connected to said rotor (110) and an output (S) connected to said spindle (13) in order to drive the latter such that it moves along the axis thereof, said means for determining at least one piece of information representing the torque exerted on said spindle being placed in said transmission.

7. Drill according to any of claims 3 to 5, wherein said transmission comprises at least one epicyclic train provided with a ring gear (27), said ring gear (27) being capable of moving in rotation within the casing (10) of said drill (1) between two end positions against the effect of elastic return means (31), a rotation of said ring gear (27) against the effect of said elastic return means (31) under the effect of an increase in the torque exerted on said spindle (13) being accompanied by a displacement of said valve (18) towards the open position thereof, and vice versa.

8. Drill according to any of claims 3 to 5, wherein said transmission comprises at least one epicyclic train provided with a planet carrier, said planet carrier being capable of moving in rotation within the casing (10) of said drill (1) against the effect of elastic return means (31), a rotation of said planet carrier (27) against the effect of said elastic return means (31) under the effect of an increase in the torque exerted on said spindle (13) being accompanied by a displacement of said valve (18) towards the open position thereof, and vice versa.

9. Drill according to claim 7 or 8, comprising a channel (16) for supplying compressed air to said pump (15) and a finger (34) driven such that it moves by said ring gear (27) or said planet carrier, said finger (34) being capable of moving between at least:
- a position for opening said channel (16) for supplying said pump (15), this position being taken when said ring gear (27) or said planet carrier is situated in a position under the effect of a torque exerted on said spindle (13) of a value at least equal to a predetermined threshold, and
- a position for closing off said channel (16) for supplying said pump (15), this position being taken when said ring gear (27) or said planet carrier is situated in a position under the effect of a torque exerted on said spindle (13) of a value below said predetermined threshold.

10. Drill according to claims 7 or 8, comprising a lever (32) rigidly connected to said ring gear (27) or said planet carrier and acting on said valve (18), said lever (32) being capable of moving between at least:
- a position for opening said valve (18), this position being taken when said ring gear (27) or said planet carrier is situated in a position under the effect of a torque exerted on said spindle (130) of a value at least equal to a predetermined threshold, and
- a position for closing off said valve (18), this position being taken when said ring gear (27) or said planet carrier is situated in a position under the effect of a torque exerted on said spindle (13) of a value below said predetermined threshold.

11. Drill according to any of claims 7 to 10, comprising means (33) for adjusting the calibration of said elastic return means (31).

12. Drill according to any of claims 6 to 11, wherein said motor (11) is pneumatic, said drill (1) comprising at least one channel (17) for supplying compressed air to said motor (11) to which at least one channel (16) for supplying compressed air to said pump (15) is connected, said valve (18) being disposed along said channel (16) for supplying compressed air to said pump (15).
